# EUROPÄISCHE PATENTANMELDUNG

(11) **EP 2 730 160 A1**
(43) Veröffentlichungstag der Anmeldung: **14.05.2014**
(21) Anmeldenummer: 13186295.5
(22) Anmeldetag: 27.09.2013
(51) Int. Cl.: A01J 25/02, A01J 25/06

(54) **Koagulationsbehälter**

(30) Priorität: 08.11.2012 DE 102012220325
(71) Anmelder: ALPMA Alpenland Maschinenbau GmbH, 83543 Rott am Inn (DE)
(72) Erfinder: Strohn, Gisbert, 83123 Amerang (DE)
(74) Vertreter: Manitz, Finsterwald & Partner GbR

(57) **Zusammenfassung**

Die vorliegende Erfindung betrifft einen mobilen Koagulationsbehälter (10) zur Herstellung von Käserohmasse insbesondere für die Paneer-Käseherstellung. Der Koagulationsbehälter weist eine den Innenraum (12) des Koagulationsbehälters allseits umgebende Behälterwand (14) auf, in der zumindest eine durch ein Ventil (22, 28) verschlossene Öffnung zum Befüllen und/oder Entleeren des Koagulationsbehälters vorgesehen ist.

## Beschreibung

Die vorliegende Erfindung betrifft einen Koagulationsbehälter zur Herstellung von Käserohmasse insbesondere für die Paneer-Käseherstellung.

Zur Gewinnung von Käserohmasse aus Milch kommen üblicherweise sogenannte Koagulatoren zum Einsatz, die im Wesentlichen aus einem langgestreckten Trog bestehen, der an seinem einen Ende einen Einfüllbereich und an seinem anderen Ende einen Austragsbereich aufweist, wobei das Trogvolumen durch eine Mehrzahl von an den Trogquerschnitt angepassten Trennwänden in in Längsrichtung aufeinanderfolgende Zellen unterteilt ist. Derartige Koagulatoren werden beispielsweise in den Druckschriften DE 195 31 601 A1, DE 197 46 409 A1 oder DE 10 2008 038 148 A1 beschrieben.

Mittels solcher Vorrichtungen wird die Milch bei der Käseherstellung dem sogenannten Koagulationsvorgang ausgesetzt. Um dabei zu verhindern, dass sich im Einfüllbereich zulaufende Milch mit der bereits koagulierenden Milch vermischt, wird das Innenvolumen des Trogs durch die in Transportrichtung voneinander beabstandeten Trennwände unterteilt, wodurch mehrere aufeinanderfolgende Zellen gebildet werden, die strömungstechnisch voneinander entkoppelt sind. Auf diese Weise kann beispielsweise eine Zelle mit Milch befüllt werden, während die Milch in der dieser Zelle vorauslaufenden Zelle bereits koaguliert, ohne dass dieser Koagulationsvorgang auf nachteilige Weise beeinflusst wird.

Da die im Trog derartiger Koagulatoren koagulierende Milch der Umgebung ausgesetzt ist, können in unerwünschter Weise Insekten, Keime oder andere Verunreinigungen aus der Luft in die Käserohmasse gelangen. In den meisten westlichen Industrieländern wird dieser Problematik erfolgreich durch entsprechend strenge Hygienestandards Rechnung getragen. In jüngster Vergangenheit werden jedoch auch in einigen Schwellenländern, in denen keine oder nur geringe Hygienestandards existieren, Anstrengungen zur industriellen Herstellung von Paneer-Käse unternommen. Da in derartigen Schwellenländern häufig keine oder nur geringe Hygienestandards existieren, eignen sich daher dort die zuvor beschriebenen Koagulatoren nur bedingt zur Herstellung von Käserohmasse für die Paneer-Käseherstellung.

Der Erfindung liegt daher die Aufgabe zugrunde, eine Vorrichtung zur Herstellung von Käserohmasse aus Milch zu schaffen, mit der der zuvor beschriebenen Hygieneproblematik Rechnung getragen wird.

Erfindungsgemäß wird diese Aufgabe durch einen Koagulationsbehälter mit den Merkmalen des Anspruchs 1 zur Herstellung von Käserohmasse insbesondere für die Paneer-Käseherstellung und insbesondere dadurch gelöst, dass der Koagulationsbehälter zum Transport zwischen einer Befüllungsstation und einer Entleerungsstation mobil ausgebildet ist und eine den Innenraum des Koagulationsbehälters allseits umgebende Behälterwand aufweist, in der zumindest eine durch ein Ventil verschlossene Öffnung zum Befüllen und/oder Entleeren des Koagulationsbehälters vorgesehen ist.

Der eingangs beschriebene Koagulator mit seinen Zellen wird also erfindungsgemäß gewissermaßen in einzelne Koagulationsbehälter aufgelöst, so dass diese einzeln von einer Befüllungsstation zu einer Entleerungsstation und zurück transportiert werden können. Aufgrund der geschlossenen Behälterwand des Koagulationsbehälters wird dabei der Zutritt von Insekten, Keimen oder anderen Verunreinigungen aus der Luft zu der im Behälterinnenraum befindlichen Milch verhindert. Mit anderen Worten ist also die im Behälterinnenraum befindliche Milch, die darin zu Käserohmasse koaguliert, aufgrund der geschlossenen Behälterbauweise hermetisch gegenüber der Umgebung abgeschlossen, so dass der Koagulationsbehälter auch dort zur Herstellung von Käserohmasse zum Einsatz kommen kann, wo keine oder nur geringe Hygienestandards existieren.

Zur industriellen Herstellung von Käserohmasse kann dabei eine Vielzahl erfindungsgemäßer Koagulationsbehälter zum Einsatz kommen, welche analog zu den eingangs beschriebenen Koagulatoren an einer Befüllungsstation mit Milch und Säure für den Koagulationsvorgang befüllt werden, bevor sie nach einer gewissen Zeit, die der Koagulationsvorgang benötigt, an einer Entleerungsstation wieder entleert werden können.

Zwar ist es möglich, den Koagulationsbehälter durch dasselbe Ventil zu entleeren, durch das zuvor die Milch eingebracht wurde. Gemäß einer bevorzugten Ausführungsform ist es jedoch vorgesehen, dass der Koagulationsbehälter ein Befüllungsventil und ein Entleerungsventil aufweist, wobei sich das Befüllungsventil in einem Befüllstutzen befindet, der in einer im Deckelabschnitt der Behälterauswand ausgebildeten Befüllöffnung mündet. Demgegenüber befindet sich das Entleerungsventil in einem Entleerungsrohr, das mit einer in einem Bodenschnitt der Behälterwand ausgebildeten Entleerungsöffnung in Fluidverbindung steht. Diese Ausführungsform ermöglicht es, den Koagulationsbehälter rein unter Ausnutzung der auf die Milch bzw. die Käserohmasse einwirkenden Schwerkraft zu befüllen und zu entleeren, wodurch ansonsten erforderliche Druck- und/oder Saugeinrichtungen zum Befüllen und Entleeren nicht benötigt werden.

Da die Milch während des in dem Koagulationsbehälter ablaufenden Koagulationsvorgangs gerinnt, kann es problematisch sein, die Käserohmasse an der Entleerungsstation durch das Entleerungsventil aus dem Koagulationsbehälter zu entleeren. Gemäß einer weiteren Ausführungsform wird daher erfindungsgemäß vorgeschlagen, den Koagulationsbehälter im Innern mit einer Schneid- oder Mischvorrichtung auszustatten, mit Hilfe derer die Käserohmasse zerkleinert werden kann. Beispielsweise kann der Koagulationsbehälter im Innern mit einer Vielzahl von feststehenden Mischerschaufeln ausgestattet sein, mit Hilfe derer die im Behälterinnern befindliche Käserohmasse zerkleinert und gemischt werden kann, wenn der Koagulationsbehälter als Ganzes einer Drehbewegung ähnlich einem Betonmischer unterworfen wird.

Gemäß einer bevorzugten Ausführungsform ist es jedoch vorgesehen, dass der Koagulationsbehälter ein Rührwerk mit einer Antriebswelle aufweist, die sich durch die Behälterinnenwand hindurch nach außen erstreckt. Die Antriebswelle kann somit mit Hilfe eines Motors, der nicht Bestandteil des Koagulationsbehälters ist, angetrieben werden, um so die in dem Koagulationsbehälter befindliche Käserohmasse zu zerkleinern und zu durchmischen. Im Unterschied zu der zuvor beschriebenen Ausführungsform, bei der der Koagulationsbehälter insgesamt einer Rotationsbewegung unterworfen werden muss, werden somit verhältnismäßig aufwändige und massiv bzw. stabil auszubildende Drehvorrichtungen zum Drehen des Koagulationsbehälters nicht erforderlich.

Um den Koagulationsbehälter von einer Befüllungsstation zu einer Entleerungsstation überführen zu können, weißt der Koagulationsbehälter vorzugsweise ein Füllvolumen von 150 bis 200 Liter auf. Insbesondere entspricht dabei das Füllvolumen des Koagulationsbehälters dem Füllvolumen der zugehörigen Käseform, so dass der Koagulationsbehälter zugunsten der Hygienesicherheit auf einmal entleert werden kann. Obwohl der Koagulationsbehälter aufgrund seines geringen Volumens zwischen zwischen einer Befüllungsstation und einer Entleerungsstation transportabel und mobil ist, ist es gemäß einer weiteren Ausführungsform vorgesehen, dass der Koagulationsbehälter ein Fahrgestell mit Rollen oder Rädern aufweist. Der Koagulationsbehälter ist dabei fest mit dem Fahrgestell verbunden und wird von diesem getragen, so dass der Koagulationsbehälter auf seinem Fahrgestell beispielsweise von einem Arbeiter mühelos von der Befüllungsstation zu der Entleerungsstation geschoben oder gezogen werden kann.

Da der Koagulationsbehälter gegenüber der Umgebung durch seine Behälterwand hermetisch abgeschlossen ist, bedarf es besonderer Vorkehrungen, um den Koagulationsbehälter nach der Entnahme der fertig hergestellten Käserohmasse reinigen zu können. Dementsprechend ist es gemäß einer weiteren Ausführungsform vorgesehen, dass der Koagulationsbehälter einen separaten Anschluss aufweist, über den sich eine Reinigungsflüssigkeit in den Koagulationsbehälter einbringen lässt. Vorzugsweise ist dabei der Anschluss mit einer im Innern des Koagulationsbehälters befindlichen Sprühvorrichtung wie beispielsweise einer Sprühkugel fluidtechnisch verbunden. Nach der Entleerungsstation kann der Koagulationsbehälter somit zu einer Reinigungsstation transportiert werden, wo die Innenseite der Behälterwand über den in Rede stehenden separaten Anschluss mit einer Reinigungsflüssigkeit besprüht werden kann, welche danach durch die im Bodenabschnitt der Behälterwand ausgebildete Entleerungsöffnung sowie das sich daran anschließende Entleerungsventil aus dem Behälterinneren ablaufen kann. Der Koagulationsbehälter muss somit zu Reinigungszwecken nicht demontiert bzw. geöffnet werden, wodurch in der gewünschten Weise eine in der Nahrungsmittelindustrie als "cleaning in place" bezeichnete ortsgebundene Reinigung realisiert werden kann.

Wie bereits zuvor erwähnt wurde, kann der Koagulationsbehälter aufgrund seiner Lagerung auf einem Fahrgestell von einem Arbeiter von einer Befüllungsstation zu einer Entleerungsstation geschoben werden. Um den Käserohmassenherstellungsprozess für die industrielle Herstellung jedoch weiter automatisieren zu können, ist es gemäß einer weiteren Ausführungsform vorgesehen, dass sich zwischen der Befüllungsstation und der Entleerungsstation eine Förderanlage erstreckt, mit Hilfe derer eine Vielzahl von Koagulationsbehältern zwischen der Befüllungs- und der Entleerungsstation transportierbar sind. Da die einzelnen Koagulationsbehälter von fahrbaren Gestellen getragen werden, können die einzelnen Koagulationsbehälter entlang eines Schienenstrangs zwischen der Befüllungs- und der Entleerungsstation geführt werden. Obwohl die Koagulationsbehälter bzw. deren Fahrgestelle dabei wie Eisenbahnwagons auf den Schienen des Schienenstrangs rollen können, ist es jedoch ebenfalls möglich, dass der Schienenstrang lediglich zur Führung zwischen der Befüllungs- und der Entleerungsstation dient, wobei die Koagulationsbehälter bzw. deren Fahrgestelle selbst auf einer ebenen Bahn rollen, die zumindest abschnittsweise ein Gefälle aufweisen kann, so dass die Koagulationsbehälter schwerkraftbedingt von der Befüllungsstation zu der Entleerungsstation durch den Schienenstrang geführt gelangen können.

Im Folgenden wird nun die Erfindung rein exemplarisch anhand einer beispielhaften Ausführungsform unter Bezugnahme auf die beigefügten Zeichnungen beschrieben, wobei:
- Fig. 1: eine perspektivische Darstellung des erfindungsgemäßen Koagulationsbehälters ist;
- Fig. 2: ein vertikaler Längsschnitt durch den Koagulationsbehälter der Fig. 1 ist;
- Fig. 3: eine perspektivische Darstellung einer Koagulationsstraße mit einer Vielzahl von erfindungsgemäßen Koagulationsbehältern ist;
- Fig. 4 und 5: den Befüllungsvorgang des Koagulationsbehälters erläutern;
- Fig. 6 und 7: den Befüllungsvorgang unter Verwendung des in dem Koagulationsbehälter befindlichen Rührwerks erläutern;
- Fig. 8 und 9: den Entleerungsvorgang erläutern; und
- Fig. 10: den Reinigungsvorgang erläutert.

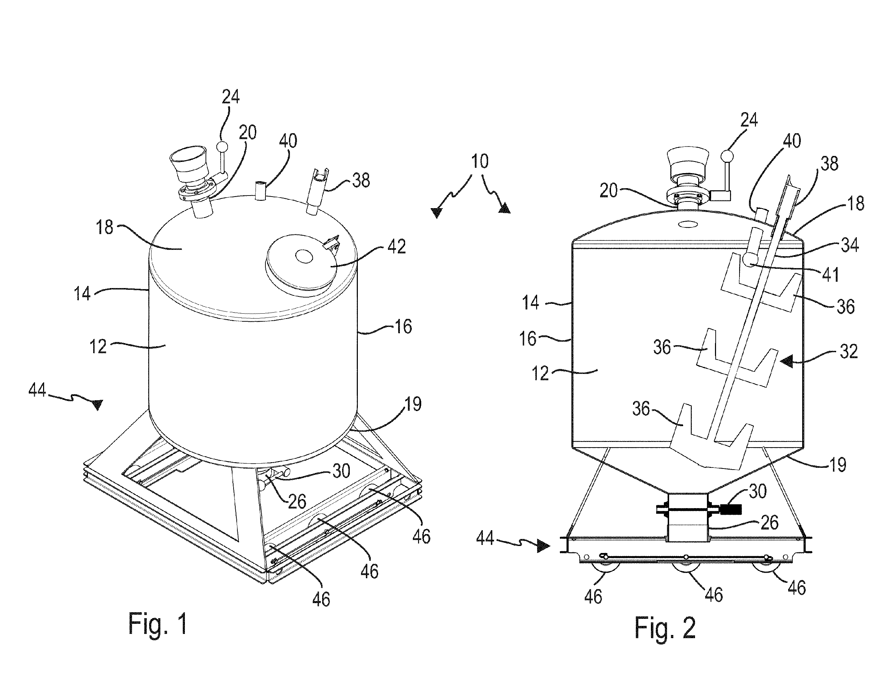

Wie der Zusammenschau der Fig. 1 und 2 entnommen werden kann, weist der erfindungsgemäße Koagulationsbehälter 10 eine geschlossene Behälterhülle in Form einer den Innenraum 12 des Koagulationsbehälters 10 allseitig umgebenen Behälterwand 14 auf. In der dargestellten Ausführungsform wird die Behälterwand 14 durch einen hohlzylindrischen Wandabschnitt 16 sowie damit durch Schweißen einstückig verbundene Deckel- bzw. Bodenabschnitte 18, 19 gebildet, die jeweils nach außen konvex gekrümmt sind. Die Behälterwand 14 besteht vorzugsweise aus Edelstahl und definiert ein Innenvolumen von vorzugsweise 160 Liter, so dass der Koagulationsbehälter 10 von Hand manipuliert und von einem Arbeiter zwischen einer Befüllungsstation und einer Entleerungsstation hin und her bewegt werden kann.

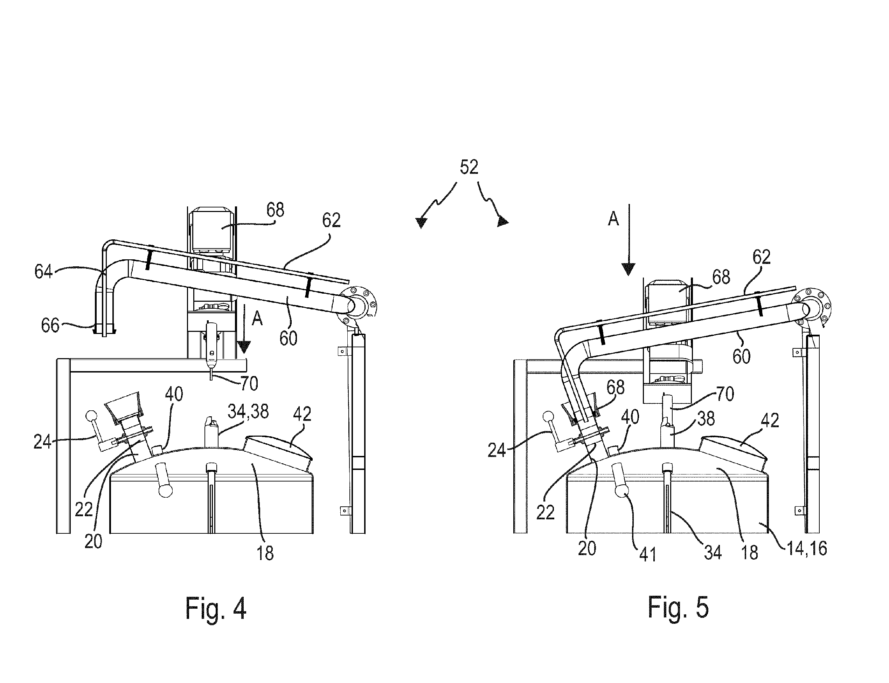

Um den Koagulationsbehälter 10 mit Milch und der für den Koagulationsvorgang benötigten Säure befüllen zu können, weist der Koagulationsbehälter 10 einen Befüllstutzen 20 auf, der in einer im Deckelabschnitt 18 ausgebildeten Befüllöffnung mündet. Wie insbesondere in den Fig. 4 und 5 erkennbar ist, befindet sich in dem Befüllstutzen 20 ein als Klappe ausgebildetes Befüllungsventil 22, welches mittels eines Hebels 24 händisch geöffnet werden kann. In entsprechender Weise steht eine im Bodenabschnitt 19 ausgebildete Entleerungsöffnung mit einem Entleerungsrohr 26 in Fluidverbindung, in dem sich ein als Klappe ausgebildetes Entleerungsventil 28 befindet, welches ebenfalls mittels eines Hebels 30 händisch betätigt werden kann.

Im unbetätigten bzw. Ausgangszustand verschließen sowohl das Befüllungsventil 22 als auch das Entleerungsventil 28 den jeweiligen Rohrabschnitt 20, 26, in dem sie angeordnet sind, um so während des Koagulationsvorgangs den Zutritt unerwünschter Substanzen oder Organismen zu dem Behälterinnenraum 12 zu verhindern. Hierzu können die beiden Ventilklappen 22, 28 in Richtung ihrer geschlossenen Stellung beispielsweise durch Torsionsfedern vorgespannt sein, wobei das schwerkraftbedingte Drehmoment des jeweiligen Hebels 24, 30 das zugehörige Ventil 22, 28 zusätzlich in die geschlossene Stellung drängen kann.

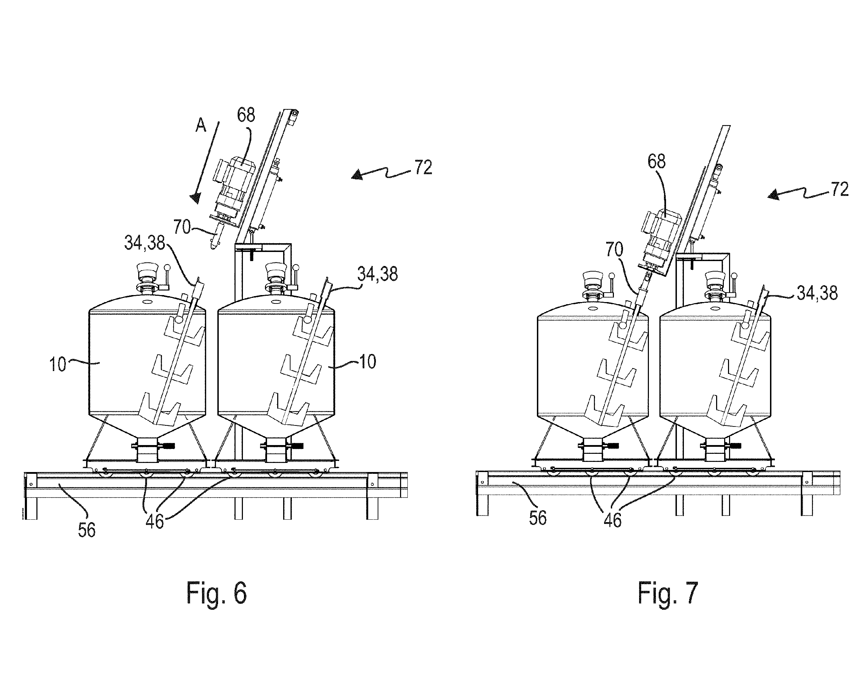

Wie insbesondere der Fig. 2 entnommen werden kann, weist der Koagulationsbehälter 10 in seinem Innenraum 12 ein Rührwerk 32 auf, welches im Wesentlichen aus einer sich durch den Deckelabschnitt 18 hindurch erstreckenden Antriebswelle 34 mit daran angebrachten Mischerflügeln 36 besteht. Das freie Ende der Antriebswelle 34, das sich durch die Behälterwand 14 bzw. den Deckelabschnitt 18 nach außen erstreckt, weist eine Kupplung 38 auf, über die sich die Antriebswelle 34 mit der Abtriebswelle eines Motors koppeln lässt, der selbst nicht Bestandteil des Koagulationsbehälters 10 ist (siehe Fig. 6 und 7).

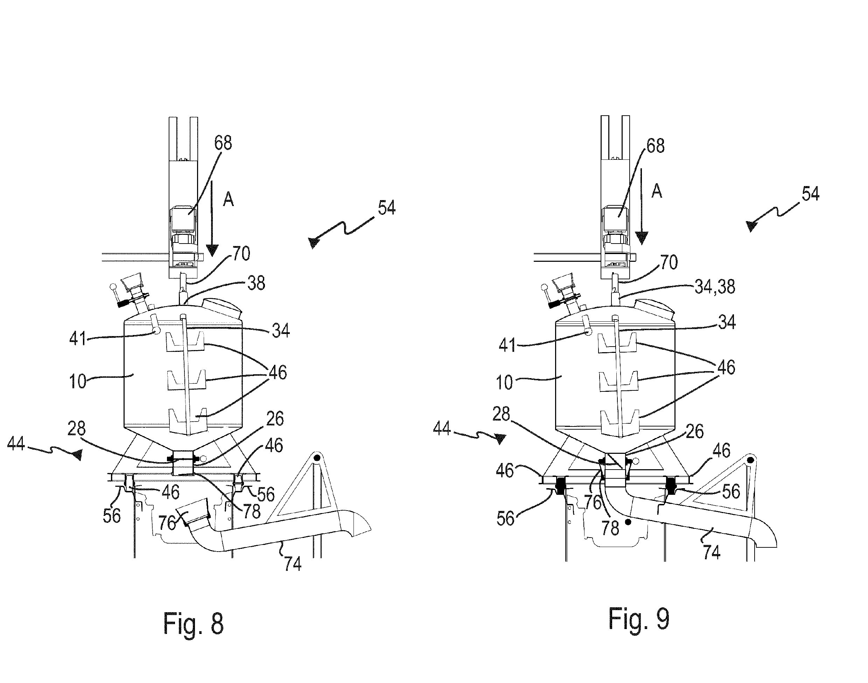

Des Weiteren weist der Deckelabschnitt 18 des Koagulationsbehälters 10 einen separaten Anschluss 40 auf, über den unterschiedliche Reinigungsflüssigkeiten in den Koagulationsbehälter 10 eingebracht werden können. Wie insbesondere der Fig. 2 oder der Fig. 9 entnommen werden kann, steht der Anschluss 40 mit einer im Innenraum 12 des Koagulationsbehälters 10 befindlichen Sprühvorrichtung in Form einer Sprühkugel 41 in Fluidverbindung, so dass über den Anschluss 40 und die Sprühkugel 41 unter Druck stehende Reinigungsflüssigkeit auf die Innenseite der Behälterwand 14 gesprüht werden kann.

Darüber hinaus weist der Koagulationsbehälter 10 eine im Deckelabschnitt 18 ausgebildete Revisionsöffnung 42 auf, über die beispielsweise außerordentliche Reinigungs- und/oder Reparaturarbeiten im Inneren des Behälters 10 ausgeführt werden können.

Um den Koagulationsbehälter 10 im Rahmen der industriellen Herstellung von Käserohmasse von einer Befüllungsstation zu einer Entleerungsstation transportieren zu können, ruht der Koagulationsbehälter 10 auf einem Fahrgestell 44, welches mehrere Rollen bzw. Räder 46 aufweist.

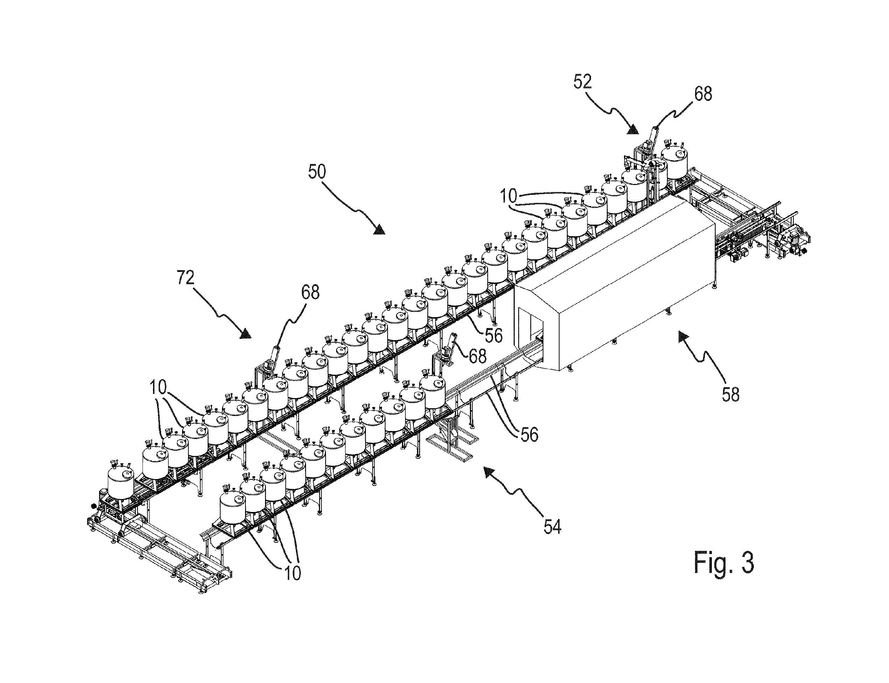

Im Folgenden wird nun unter Bezugnahme auf die Fig. 3ff. die industrielle Herstellung von Käserohmasse für die Paneer-Käseherstellung unter Verwendung der erfindungsgemäßen Koagulationsbehälter 10 erläutert.

Die Fig. 3 zeigt eine Koagulationsstraße 50 mit einer Vielzahl von Koagulationsbehältern 10, die zwischen einer Befüllungsstation 52 und einer Entleerungsstation 54 auf Schienen 56 transportiert werden. Im Anschluss an die Entleerungsstation 54 gelangen die Koagulationsbehälter 10 über die Schienen 56 zu einer Reinigungsstation 58, von wo aus sie anschließend wieder zu der Befüllungsstation 52 befördert werden, um erneut befüllt zu werden. Die Schienen 56 können in Transportrichtung ein geringfügiges Gefälle aufweisen, so dass die Koagulationsbehälter 10 von selbst schwerkraftbedingt in Richtung der Entleerungsstation 54 und von dort zu der Reinigungsstation 58 rollen. Ergänzend oder alternativ hierzu lassen sich die einzelnen Koagulationsbehälter 10 jedoch auch beispielsweise mit Hilfe eines Kettenantriebs zur Entleerungsstation 54 und von dort zu der Reinigungsstation 58 transportieren.

Unter Bezugnahme auf die Fig. 4 und 5 wird nun der Befüllungsvorgang in der Befüllungsstation 52 erläutert. Die Befüllungsstation 52 weist ein verschwenkbares Befüllrohr 60 zur Zufuhr von Milch auf, an dem eine Säureleitung 62 zur Zufuhr von Säure befestigt ist, die für den Koagulationsvorgang benötigt wird. Das Befüllrohr 60 weist im Bereich seines freien Endes eine Öffnung 64 auf, durch die die Säureleitung 62 abgedichtet in das freie bzw. offene Ende des Befüllrohrs 60 hineinragt. Hierdurch kann gewährleistet werden, dass durch die Dichtung 66 an der Rohrmündung des Befüllrohrs 60 ein dichter Abschluss gegenüber dem Befüllstutzen 20 gegeben ist, so dass auch während des Befüllungsvorgangs gemäß Fig. 5 keine Insekten, Keime oder andere Verunreinigungen aus der Luft in das Behälterinnere 12 gelangen können.

Wie der Fig. 4 des Weiteren entnommen werden kann, weist die Befüllungsstation 52 ferner einen Motor 68 mit einer Abtriebswelle 70 auf, welche sich mit der Kupplung 38 der Antriebswelle 34 des Rührwerks 32 lösbar verbinden lässt, wozu der Motor 68 geringfügig abgesenkt werden muss, wie dies durch den Pfeil A angedeutet ist. Somit kann bereits während des Befüllungsvorgangs mit Hilfe des Motors 68 das Rührwerk 32 in Bewegung versetzt werden, um so die für den Koagulationsvorgang benötigte Säure mit der Milch vermischen zu können.

Wie der Fig. 3 entnommen werden kann, befindet sich auf dem Weg zwischen der Befüllungsstation 52 und der Entleerungsstation 54 mindestens eine zusätzliche Rührstation 72, siehe Fig. 6 und 7. Diese Rührstationen 72 weisen wie die Befüllungsstation 52 einen Antriebsmotor 68 mit einer Abtriebswelle 70 auf, welche sich durch Absenken des Motors 68 in Richtung des Pfeils A mit der Antriebswelle 64 des Rührwerks 32 über dessen Kupplung 38 verbinden lässt.

Auch die in den Fig. 8 und 9 dargestellte Entleerungsstation 52 verfügt wie die Befüllungs- und Rührstation über einen selektiv mit dem Rührwerk 32 koppelbaren Antriebsmotor 68, so dass die Käserohmasse zur vollständigen Entleerung des Behälters 10 während des Entleerungsvorgangs in Bewegung gehalten werden kann. Darüber hinaus weist die Entleerungsstation 54 ein verschwenkbares Entleerungsrohr 74 auf, welches an seinem freien Ende einen Trichterabschnitt 76 aufweist, welcher sich mit einer am freien Ende des Entleerungsrohrs 26 des Behälters 10 angeordneten Dichtung 78 dichtend in Eingriff bringen lässt, so dass auch während des Entleerungsvorgangs keine Insekten, Keime oder andere Verunreinigungen aus der Luft ins Innere des Behälters 10 gelangen können.

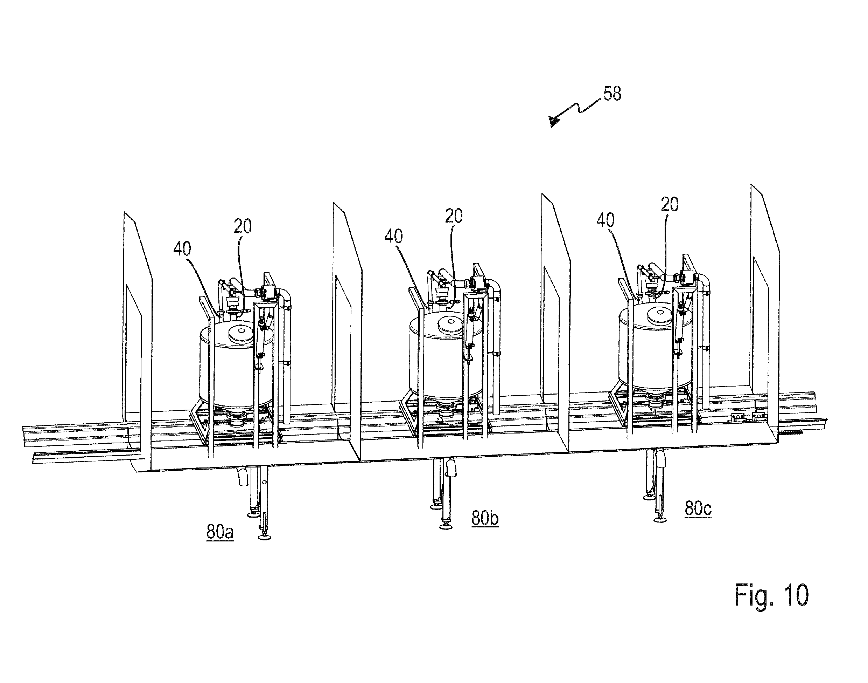

Nachdem die Koagulationsbehälter 10 auf diese Weise entleert wurden, gelangen die Behälter 10 durch die Schienen 56 geführt in die Reinigungsstation 58, welche gemäß Fig. 10 drei Reinigungsstufen 80a, 80b, 80c aufweist, im Bereich derer den Behältern 10 über den Reinigungsanschluss 40 und/oder den Befüllstutzen 20 unterschiedliche Reinigungsflüssigkeiten wie beispielsweise heißes Wasser oder chemische Reinigungsmittel zugeführt werden können, welche danach über das geöffnete Entleerungsrohr 26 schwerkraftbedingt ablaufen können.

### Bezugszeichenliste

- 10: Koagulationsbehälter
- 12: Innenraum
- 14: Behälterwand
- 16: hohlzylindrischer Wandabschnitt
- 18: Deckelabschnitt
- 19: Bodenabschnitt
- 20: Befüllstutzen
- 22: Befüllungsventil
- 24: Hebel
- 26: Entleerungsrohr
- 28: Entleerungsventil
- 30: Hebel
- 32: Rührwerk
- 34: Antriebswelle
- 36: Mischerflügel
- 38: Kupplung
- 40: separater Anschluss
- 41: Sprühkugel
- 42: Revisionsöffnung
- 44: Fahrgestell
- 46: Rollen/Räder
- 50: Koagulationsstraße
- 52: Befüllungsstation
- 54: Entleerungsstation
- 56: Schienen
- 58: Reinigungsstation
- 60: Befüllrohr
- 62: Säureleitung
- 64: Öffnung
- 66: Dichtung
- 68: Antriebsmotor
- 70: Abtriebswelle
- 72: Rührstation
- 74: Entleerungsrohr
- 76: Trichter
- 78: Dichtung
- 80a: Reinigungsstufe
- 80b: Reinigungsstufe
- 80c: Reinigungsstufe

- A: Absenkrichtung des Motors 68

## Patentansprüche

1. Koagulationsbehälter (10) zur Herstellung von Käserohmasse insbesondere für die Paneer-Käseherstellung,
**dadurch gekennzeichnet, dass** der Koagulationsbehälter (10) zum Transport zwischen einer Befüllungsstation (52) und einer Entleerungsstation (54) mobil ausgebildet ist und eine den Innenraum (12) des Koagulationsbehälters (10) allseits umgebende Behälterwand (14) aufweist, in der zumindest eine durch ein Ventil (22, 28) verschlossene Öffnung zum Befüllen und/oder Entleeren des Koagulationsbehälters (10) vorgesehen ist.

2. Koagulationsbehälter nach Anspruch 1,
**dadurch gekennzeichnet, dass** der Koagulationsbehälter (10) ein Rührwerk (32) aufweist, das vorzugsweise über keinen eigenen Motor verfügt.

3. Koagulationsbehälter nach Anspruch 2,
**dadurch gekennzeichnet, dass** das Rührwerk (32) eine Antriebswelle (34) aufweist, die sich durch die Behälterwand (14) hindurcherstreckt.

4. Koagulationsbehälter nach zumindest einem der vorstehenden Ansprüche,
**dadurch gekennzeichnet, dass** der Koagulationsbehälter (10) ein Befüllungsventil (22) und ein Entleerungsventil (28) aufweist, wobei sich das Befüllungsventil (22) in einem Befüllstutzen (20) befindet, der in einer in einem Deckelabschnitt (18) der Behälterwand (14) ausgebildeten Befüllöffnung mündet, und wobei sich das Entleerungsventil (28) in einem Entleerungsrohr (26) befindet, das mit einer in einem Bodenabschnitt (19) der Behälterwand (14) ausgebildeten Entleerungsöffnung in Fluidverbindung steht.

5. Koagulationsbehälter nach zumindest einem der vorstehenden Ansprüche,
**dadurch gekennzeichnet, dass** der Koagulationsbehälter (10) von einem Fahrgestell (44) mit Rädern (46) getragen wird.

6. Koagulationsbehälter nach zumindest einem der vorstehenden Ansprüche,
**dadurch gekennzeichnet, dass** der Koagulationsbehälter (10) einen separaten Anschluss (40) aufweist, über den sich eine Reinigungsflüssigkeit in den Koagulationsbehälter (10) einbringen lässt, wobei der Anschluss (40) vorzugsweise mit einer im Innern (12) des Koagulationsbehälters (10) befindlichen Sprühvorrichtung, insbesondere einer Sprühkugel (41), in Fluidverbindung steht.

7. Koagulationsstraße (50) zur Herstellung von Käserohmasse für die Paneer-Käseherstellung mit einer Vielzahl von Koagulationsbehältern (10) gemäß zumindest einem der vorstehenden Ansprüche, die zwischen einer Befüllungsstation (52) und einer Entleerungsstation (54) transportierbar sind.

8. Koagulationsstraße nach Anspruch 7,
**gekennzeichnet durch**
eine sich zwischen der Befüllungsstation (52) und der Entleerungsstation (54) erstreckenden Förderanlage, mit Hilfe derer die Koagulationsbehälter (10) zwischen der Befüllungs- (52) und der Entleerungsstation (54) transportierbar sind.

9. Koagulationsstraße nach Anspruch 7 oder 8,
**dadurch gekennzeichnet, dass** entlang der Transportstrecke zwischen der Befüllungs- (52) und der Entleerungsstation (54) zumindest ein Antriebsmotor (68) vorgesehen ist, welcher zum Antrieb des Rührwerks (32) mit dessen Antriebwelle (34) koppelbar ist.

10. Koagulationsstraße nach Anspruch 7, 8 oder 9,
**dadurch gekennzeichnet, dass** die Förderanlage einen Schienenstrang (56), insbesondere ein aus zwei Schienen bestehendes Gleis, aufweist, entlang dessen die Koagulationsbehälter (10) zwischen der Befüllungs- (52) und der Entleerungsstation (54) geführt werden, wobei vorzugsweise der Schienenstrang zumindest abschnittsweise ein Gefälle aufweist.
